# EUROPEAN PATENT APPLICATION

(11) **EP 2 750 463 A1**
(43) Date of publication of application: **02.07.2014**
(21) Application number: 12306701.9
(22) Date of filing: 28.12.2012
(51) Int. Cl.: H04W 72/04, H04L 5/00

(54) **Sharing of uplink physical layer signaling by two or more mobile stations in a mobile system supporting carrier aggregation**

(71) Applicant: Alcatel Lucent, 75007 Paris (FR)
(72) Inventor: Cayla, Stéphane, 91620 Nozay (FR); De Lannoy, Arnaud, 91620 Nozay (FR); Bratschi, Sylvain, 91620 Nozay (FR)
(74) Representative: El Manouni, Josiane

(57) **Abstract**

In an embodiment, there is provided a method for transmission of uplink physical layer signalling in a mobile system supporting Carrier Aggregation CA wherein multiple Component Carriers CCs including a Primary CC and at least one Secondary CC are associated with User Equipments UEs, and wherein signalling related to a Secondary CC, referred to as Secondary signalling, is transmitted on a resource, referred to as Secondary resource, configured on said Primary CC for said transmission of Secondary signalling, a method wherein:
- a same Secondary resource is used for transmission of Secondary signaling related to a Secondary CC associated with at least two UEs.

## Description

The present invention generally relates to mobile communication networks and systems.

Detailed descriptions of mobile communication networks and systems can be found in the literature, such as in particular in Technical Specifications published by standardization bodies such as for example 3GPP (3^{rd} Generation Partnership Project).

In general, in such systems, an User Equipment (UE) has access to mobile services via a mobile network including a Radio Access Network (RAN). The RAN includes Base Stations via which UEs have access to the mobile network.

An example of packet mobile communication system is EPS (Evolved Packet System). In EPS, the RAN is called E-UTRAN and the Base Stations are called eNodeB (eNB). E-UTRAN uses LTE (Long Term Evolution) technology which was introduced in Release 8 of 3GPP.

In such systems, various Radio Resource Management (RRM) algorithms are used to ensure that radio resources are efficiency used. Examples of such mechanisms include packet scheduling, link adaptation, ...etc. Performing such algorithms at a base station (such as eNB in E-UTRAN) requires uplink physical layer signaling, such as Channel State Information (CSI) feedback from the UE. Such signaling or feedback is generally sent on a channel referred to as uplink control channel (such as PUCCH in E-UTRAN).

In Release 10 of 3GPP, new functionalities have been introduced, in particular a functionality referred to as Carrier Aggregation (CA) enabling to provide higher data rates compared to LTE Release 8/release 9, thanks to aggregation of multiple Component Carriers (CC). LTE Release 10 is also called LTE-Advanced (LTE-A), as opposed to LTE Release 8/9 also called legacy LTE.

While CA enables higher user data rates, an issue is the transmission of uplink physical layer signaling using uplink control channel (such as PUCCH in E-UTRAN). Such channel indeed has a limited capacity, whereas additional signaling or feedback information is needed due to multiple Component Carriers. There is a need to improve transmission of uplink physical layer signaling (such as CSI feedback) using uplink control channel (such as PUCCH in E-UTRAN), in systems such as EPS supporting Carrier Aggregation. More generally, there is a need to improve performances of such systems.

Embodiments of the present invention in particular address such needs.

These and other objects are achieved, in one aspect, by a method for transmission of uplink physical layer signalling in a mobile system supporting Carrier Aggregation CA wherein multiple Component Carriers CCs including a Primary CC and at least one Secondary CC are associated with User Equipments UEs, and wherein signalling related to a Secondary CC, referred to as Secondary signalling, is transmitted on a resource, referred to as Secondary resource, configured on said Primary CC for said transmission of Secondary signalling, a method wherein:
- a same Secondary resource is used for transmission of Secondary signalling related to a Secondary CC associated with at least two UEs.

These and other objects are achieved, in other aspects, by entities configured to carry out such method, said entities including, in particular (though not exclusively), User Equipment (UE), and Base Station (such as eNB for E-UTRAN).

Some embodiments of apparatus and/or methods in accordance with embodiments of the present invention are now described, by way of example only, and with reference to the accompanying drawings, in which:
- Figure 1 is intended to illustrate, in a simplified way, transmission of CSI information in a system such as EPS using Carrier Aggregation,
- Figure 2 is intended to illustrate, in a simplified way, a possible solution to the problem of CA impact on PUCCH, having some drawbacks that embodiments of the present invention enable to avoid,
- Figure 3 is intended to illustrate, in a simplified way, allocation of resource for Secondary CSI transmission according to an embodiment of the present invention,
- Figure 4 is intended to illustrate, in a simplified way, configuration of resource for Secondary CSI transmission according to an embodiment of the present invention,
- Figures 5 and 6 are intended to illustrate, in a simplified way, dynamic allocation of resource for Secondary CSI transmission according to an embodiment of the present invention.

Embodiments of the present invention will be more detailed in the following, by way of example for 3GPP systems such as EPS. However it should be understood that the present invention is not limited to EPS, and could apply as well to systems other than EPS (such as systems specified by standardization bodies other than 3GPP).

Due to the incredible increase of data traffic induced by smartphones and the success of the LTE technology, operators have to add new carriers in mobile networks in order to manage the load in terms of
- Number of users: each carrier can manage a limited number of users due to common channel
- Data bandwidth: according to the bandwidth of the carrier and the QoS proposed by the operator, each carrier can manage a limited number of users.

Carrier Aggregation is one of the key feature of the 3GPP release 10, as allows
- To increase the peak throughput of the end-user
- To increase significantly the network capacity thanks to an instantaneous load balancing, which is especially efficient in case of smartphone call profile.

Some specified features of Carrier Aggregation are now recalled (for more detail, one may refer to 3GPP Technical Specifications).

In Carrier Aggregation (CA), two or more Component Carriers (CCs) are aggregated in order to support wider transmission bandwidths up to 100MHz. A UE may simultaneously receive or transmit on one or multiple CCs depending on its capabilities.

When CA is configured, the UE only has one RRC connection with the network. At RRC connection establishment/re-establishment/handover, one serving cell provides the NAS mobility information (e.g. TAl), and at RRC connection reestablishment/handover, one serving cell provides the security input. This cell is referred to as the Primary Cell (PCell). In the downlink, the carrier corresponding to the PCell is the Downlink Primary Component Carrier (DL PCC) while in the uplink it is the Uplink Primary Component Carrier (UL PCC).

Depending on UE capabilities, Secondary Cells (SCells) can be configured to form together with the PCell a set of serving cells. In the downlink, the carrier corresponding to an SCell is a Downlink Secondary Component Carrier (DL SCC) while in the uplink it is an Uplink Secondary Component Carrier (UL SCC).

The configured set of serving cells for a UE therefore always consists of one Pcell and one or more Scells.

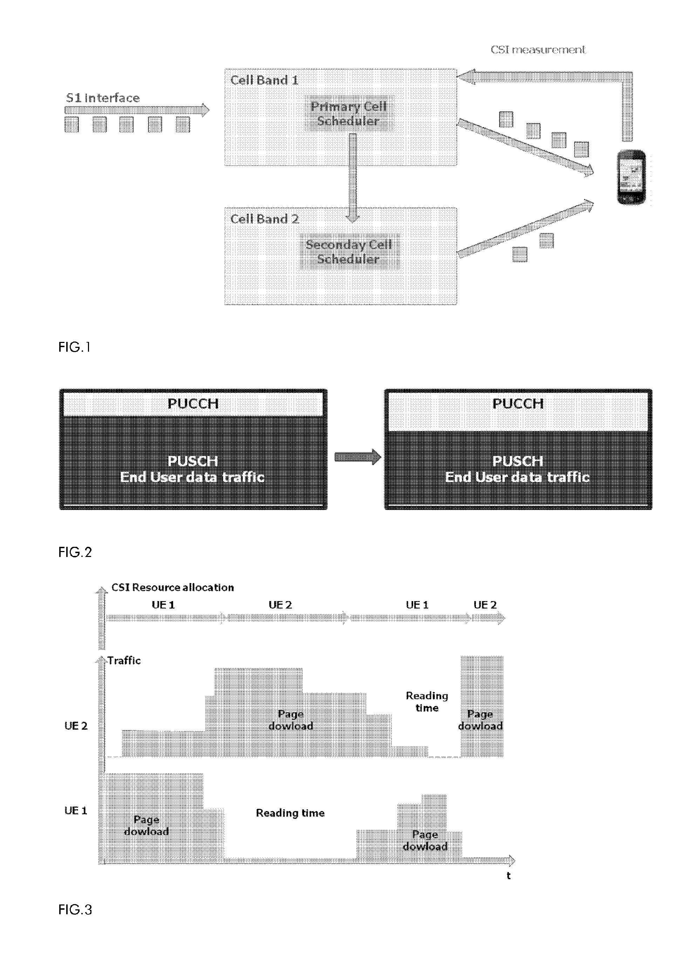

By way of example, figure 1 illustrates an UE having a set of serving cells comprising a Primary Cell and a Secondary Cell. The Primary Cell and the Secondary Cell are controlled by an eNB.

Downlink traffic for the UE is received by the eNB on S1 interface. In the eNB, a Primary Cell Scheduler and a Secondary Cell Scheduler are used for scheduling the downlink traffic to the UE. The eNB uses algorithms such as scheduling or link adaptation algorithms, using CSI information (CSI measurement) reported by the UE on PUCCH.

The PUCCH is the common channel used in LTE to report
- Ack / Nack
- Scheduling Request
- SRS
- CSI: CSI are downlink measurement provided by the UE to the eNB in order to perform the link adaptation and scheduling.

With Carrier Aggregation, even if the mobile listens to the two carriers, CSI information are reported only on the Primary cell (the cell which was used to established the call).

One problem therefore is the impact of Carrier Aggregation on PUCCH, in other words the increase of CSI information on the PUCCH of the Primary Cell, which will be the bottleneck.

A possible solution to solve this problem would be, as schematically illustrated in figure 2, to increase the size of the PUCCH. However, such solution would have serious drawbacks as it would decrease the size of the PUSCH used for transfer of uplink traffic, thus decreasing the network capacity.

Embodiments of the invention in particular enable to avoid such drawbacks or to save the uplink capacity of LTE networks.

In an embodiment, it is proposed to avoid to increase the size of the PUCCH, thanks to an overbooking of the PUCCH for Secondary Cell CSI measurement.

In an embodiment:
- In case of lack of PUCCH resource , the eNB will allocate the same PUCCH resource (also referred to as CSI resource) to two UEs for transmission of Secondary Cell CSI

In an embodiment:
- At one time,
   o The UE with e.g. the higher traffic will operate in CA mode and use the CSI resource thus will be able to receive on both carriers
   o The UE with e.g. the lowest or no traffic will operate in Rel.8 mode thus will be able to receive on only one carrier.

For example, as illustrated in figure 3:
- for a first period of time, where one of the two UEs (noted UE1) is busy with a page download whereas the other one of these two UEs (noted UE2) is less busy, CSI resource is allocated to UE1,
- for a second period of time, where UE2 is busy with a page download whereas UEI is in a page reading state, CSI resource is allocated to UE2,
   ...etc.

### 1) Description of embodiments for configuration of a same resource for transmission of Secondary Cell CSI (also referred to hereafter as CSI resource):

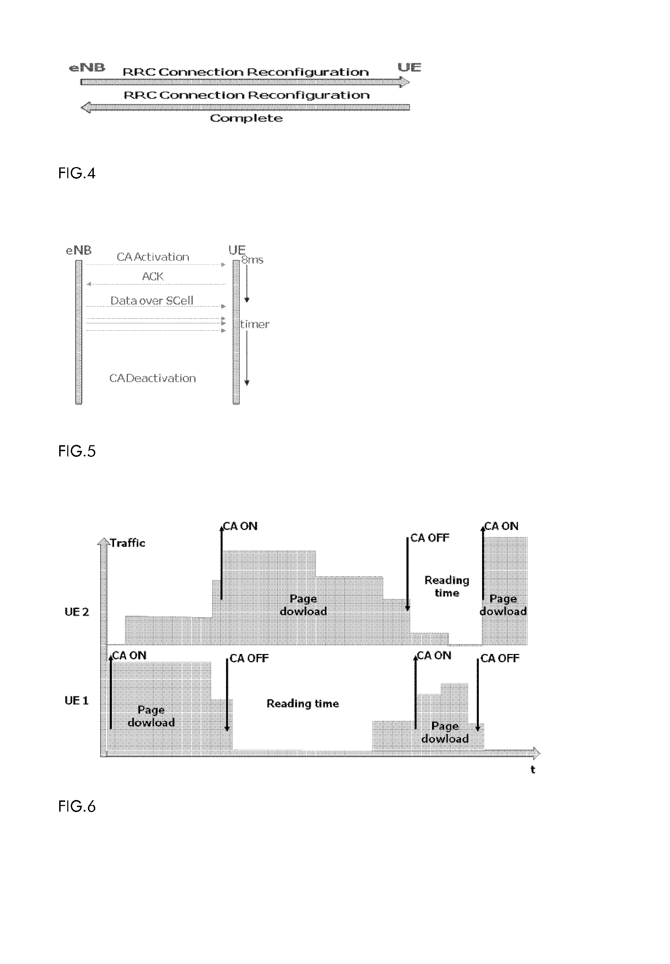

In an embodiment, this configuration is managed by the eNB thanks to an RRC (Radio Resource Control) procedure, such as RRC Connection Reconfiguration procedure as illustrated in figure 4, such as during the Carrier Aggregation configuration.

In an embodiment:
- During this procedure, if there is one free CSI resource, the eNB will allocate this free resource to the UE.
- In case of no free CSI resource, the eNB will allocate to the UE a CSI resource used for Secondary Cell CSI transmission by another UE. Quality of Service criteria may be used in order to minimize the collision probability on this CSI resource. Criteria for selecting this other UE may include, in the following order:
   1 The eNB will select first a UE with only default bearer
   2 The eNB will select a UE with dedicated bearers inducing a low level of traffic, like gaming bearers or VolP bearers
   3 The eNB will select a UE with dedicated bearers inducing a high level of traffic like video-streaming bearers

Such selection procedure may be managed e.g. by call profile.

### 2) Description of embodiments for dynamic allocation, to one of these two UEs, of said configured CSI resource:

In an embodiment, the traffic scheduler in the eNB will measure the bearer traffic for each of these two UEs. In case of collision of Secondary CSI signaling for these two UEs, CA can be activated for one UE, and de-activated for the other UE. Carrier Aggregation can be activated or deactivated thanks to a command at MAC layer level, as illustrated for example in figure 5. As the Carrier Aggregation activation is managed at the MAC layer, this command will not induce a significant load on the eNB.

In an embodiment, QoS criteria may be applied to determine for which one of these two UEs Carrier Aggregation should be activated and for which one of these two UEs Carrier Aggregation should be de-activated.

For example, as illustrated in figure 6:
- for a first period of time, where one of the two UEs (noted UE1) is busy with a page download whereas the other one of these two UEs (noted UE2) is less busy, CA is activated (CA ON) for UE1, whereas CA is de-activated for UE2
- for a second period of time, where UE2 is busy with a page download whereas UE1 is in a page reading state, CA is activated (CA ON) for UE2, whereas CA is de-activated (CA OFF) for UE1
   ...etc.

Above-described embodiments of the present invention have been described by way of example only, and other embodiments would of course be possible.

For example:
- Instead of two UEs sharing a same PUCCH resource as described above, it would be possible to consider more than two UEs. A maximum number of UEs sharing a same PUCCH resource could be considered to be a function of the type of traffic (or call profile) for these UEs.
- Instead of one Secondary CC as described above, it would be possible to consider more than one Secondary CC (for example in EPS there may be up to five CCs). Similar principles as described above for the case of one Secondary CC could apply to each Secondary CC.
- Instead of CSI as described above, it would be possible to consider other type of uplink physical layer signaling.
- ...etc.

In one aspect, there is provided a method for transmission of uplink physical layer signalling in a mobile system supporting Carrier Aggregation CA wherein multiple Component Carriers CCs including a Primary CC and at least one Secondary CC are associated with User Equipments UEs, and wherein signalling related to a Secondary CC, referred to as Secondary signalling, is transmitted on a resource, referred to as Secondary resource, configured on said Primary CC for said transmission of Secondary signalling.

Various embodiments are provided, which may be used alone or in combination, according to various combinations.

In an embodiment:
- a same Secondary resource is used for transmission of Secondary signalling related to a Secondary CC associated with at least two UEs.

In an embodiment:
- a same Secondary resource is used in case of lack of resource for said transmission of Secondary signalling.

In an embodiment:
- at least one of said at least two UEs is selected according to Quality of Service criteria, wherein said Quality of Service criteria enable to minimize a probability of collision of said Secondary signalling associated with said at least two UEs on said Secondary resource.

In an embodiment, said method includes:
- allocation of said Secondary resource to said at least two UEs by semi-static configuration.

In an embodiment, said method includes:
- allocation of said Secondary resource to said at least two UEs by semi-static configuration, said configuration performed via higher layer signalling, such as Radio Resource Control RRC signalling, between User Equipment and Base Station such as eNodeB.

In an embodiment, said method includes:
- a Base station, such as eNodeB, indicating to said at least two UEs, via higher layer signalling, such as Radio Resource Control RRC signalling, a same Secondary resource configured for said at least two UEs.

In an embodiment, said method includes:
- dynamic allocation of said Secondary resource to said at least two UEs as a function of Secondary signalling associated with said at least two UEs.

In an embodiment, said method includes:
- dynamic allocation of said Secondary resource to said at least two UEs as a function of traffic associated with said at least two UEs.

In an embodiment, said method includes:
- dynamic allocation of said Secondary resource to said at least two UEs according to amount of traffic criteria and/or Quality of Service requirements criteria for said at least two UEs.

In an embodiment, said method includes:
- in case of collision of Secondary signalling associated with said at least two UEs, dynamic allocation of said Secondary resource to said at least two UEs, by activating CA for one of said at least two UEs, and de-activating CA for other ones of said at least two UEs.

In an embodiment, said method includes:
- a Base station, such as eNodeB, indicating to said at least two UEs, via MAC layer signalling, if CA is to be activated, or de-activated, for said at least two UEs.

In an embodiment:
- said uplink physical layer signalling incudes Channel State Information feedback reporting.

In other aspects, there are provided entities configured for carrying out such method, said entities including, in particular (though not exclusively), User Equipment (UE), and Base Station (such as eNB for E-UTRAN).

The detailed implementation of such entities does not raise any special problem for a person skilled in the art, and therefore does not need to be more fully disclosed, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for transmission of uplink physical layer signalling in a mobile system supporting Carrier Aggregation CA wherein multiple Component Carriers CCs including a Primary CC and at least one Secondary CC are associated with User Equipments UEs, and wherein signalling related to a Secondary CC, referred to as Secondary signalling, is transmitted on a resource, referred to as Secondary resource, configured on said Primary CC for said transmission of Secondary signalling, a method wherein:
- a same Secondary resource is used for transmission of Secondary signalling related to a Secondary CC associated with at least two UEs.

2. A method according to claim 1, wherein:
- a same Secondary resource is used in case of lack of resource for said transmission of Secondary signaling.

3. A method according to claim 1 or 2, wherein:
- at least one of said at least two UEs is selected according to Quality of Service criteria, wherein said Quality of Service criteria enable to minimize a probability of collision of said Secondary signaling associated with said at least two UEs on said Secondary resource.

4. A method according to any of claims 1 to 3, including:
- allocation of said Secondary resource to said at least two UEs by semi-static configuration.

5. A method according to any of claims 1 to 4, including:
- allocation of said Secondary resource to said at least two UEs by semi-static configuration, said configuration performed via higher layer signaling, such as Radio Resource Control RRC signalling, between User Equipment and Base Station such as eNodeB.

6. A method according to any of claims 1 to 5, including:
- a Base station, such as eNodeB, indicating to said at least two UEs, via higher layer signaling, such as Radio Resource Control RRC signalling, a same Secondary resource configured for said at least two UEs.

7. A method according to any of claims 1 to 6, including:
- dynamic allocation of said Secondary resource to said at least two UEs as a function of Secondary signalling associated with said at least two UEs.

8. A method according to any of claims 1 to 7, including:
- dynamic allocation of said Secondary resource to said at least two UEs as a function of traffic associated with said at least two UEs.

9. A method according to any of claims 1 to 8, including:
- dynamic allocation of said Secondary resource to said at least two UEs according to amount of traffic criteria and/or Quality of Service requirements criteria for said at least two UEs.

10. A method according to any of claim 1 to 9, including:
- in case of collision of Secondary signalling associated with said at least two UEs, dynamic allocation of said Secondary resource to said at least two UEs, by activating CA for one of said at least two UEs, and de-activating CA for other ones of said at least two UEs.

11. A method according to any of claims 1 to 10, including:
- a Base station, such as eNodeB, indicating to said at least two UEs, via MAC layer signaling, if CA is to be activated, or de-activated, for said at least two UEs.

12. A method according to any of claim 1 to 11, wherein:
- said uplink physical layer signalling includes Channel State Information feedback reporting.

13. An entity such as Base Station, such as eNodeB, configured to carry out a method according to any of claims 1 to 12.

14. An entity such as User Equipment, configured to carry out a method according to any of clams 1 to 12.
